# DEMANDE DE BREVET EUROPEEN

(11) **EP 4 339 975 A1**
(43) Date de publication de la demande: **20.03.2024**
(21) Numéro de dépôt: 22306358.7
(22) Date de dépôt: 16.09.2022
(51) Int. Cl.: H01F 29/12, H02M 3/00

(54) **DISPOSITIF DE COUPLAGE MAGNÉTIQUE À COUPLAGE VARIABLE ET CIRCUIT TRANSFORMATEUR COMPORTANT UN TEL DISPOSITIF**

(71) Demandeur: Effitech, 64000 Pau (FR); Université de Pau et des Pays de l'Adour, 64012 Pau Cedex (FR)
(72) Inventeur: BRASILE, Jean-Pierre, 91190 GIF-SUR-YVETTE (FR); PAQUET, Sylvain, 64230 ARTIGUELOUVE (FR); BOUDARA, Fatima Zahra, 76480 BARDOUVILLE (FR); PECASTAING, Laurent, 64160 BARINQUE (FR); RIVALETTO, Marc, 65320 BORDÈRES SUR L'ÉCHEZ (FR); SILVESTRE DE FERRON, Antoine, 64160 RIUPEYROUS (FR)
(74) Mandataire: Tranvouez, Edern Morgan

(57) **Abrégé**

L'invention concerne un dispositif de couplage magnétique (10) comprenant : un premier ensemble (11) de premières bobines présentant un axe de bobinage ; un deuxième ensemble (12) de deuxièmes bobines (12A, 12B, 12C...) présentant un axe de bobinage. Les premières et les deuxièmes bobines (11A, 11B, 11C...,12A, 12B, 12C...) sont réparties le long d'une ligne fermée courbe avec leurs axes de bobinage s'étendant selon des bissectrices de ladite ligne courbe fermée. Au moins une deuxième bobine (12A, 12B, 12C...) est agencée mobile relativement à au moins une des deux premières bobines (11A, 11B, 11C...) successives qu'elle sépare entre une première position dans laquelle elle présente un couplage magnétique maximum et une deuxième position dans laquelle elle présente un couplage magnétique minimum vis-à-vis d'une première bobine (11A, 11B, 11C).

## Description

### Domaine technique

L'invention concerne le domaine de la connexion par couplage magnétique de circuits électriques.

L'invention a plus précisément pour objet un dispositif de couplage magnétique, un circuit transformateur et un procédé de commande d'un circuit de transformateur.

### État de l'art antérieur

Le transfert d'énergie électrique et son adaptation en tension, ceci avec des rendements optimaux, sont des enjeux primordiaux à prendre en compte dans le cadre de la réduction des émissions de dioxyde de carbone. En effet, il est important d'avoir une bonne adaptation en tension lors d'un transfert d'énergie entre un réseau électrique et une charge, telle qu'une voiture électrique, ou entre un générateur, tel qu'un panneau photovoltaïque ou une éolienne, et un réseau électrique, ceci en limitant les pertes liées à une telle adaptation. De plus, pour certaines de ces applications, par exemple pour optimiser un rechargement ou encore en raison de conditions de génération, cette adaptation peut nécessiter des gains variables.

Pour répondre à une telle problématique, il y aurait donc un intérêt à fournir des composants, tels que des dispositifs de couplage magnétique, qui autorisent une transformation en tension qui puissent permettre un gain en tension variable ceci avec un bon rendement sur une plage de gain donnée.

On notera que si de tels dispositifs de couplage magnétique sont connus de l'art antérieur, tels que celui décrit dans le document FR 794 821 A, ils présentent l'inconvénient de nécessiter un noyau magnétique de grande taille afin de limiter les pertes liées aux lignes de champ et, dans le cas de ceux divulgués par le document FR 794 821 A, de nécessiter l'utilisation d'une bobine intermédiaire. De ce fait, outre, l'encombrement important, ils ne permettent pas l'obtention d'un rendement optimal.

### Exposé de l'invention

L'invention vise à remédier à l'inconvénient ci-dessus et a ainsi pour but de fournir un composant susceptible à autoriser la fourniture d'une transformation en tension avec un gain variable ceci avec un bon rendement sur une plage de gain donnée, ce composant devant, préférentiellement, pouvoir autoriser ce rendement optimal sans présenter un encombrement important.

L'invention concerne à cet effet un dispositif de couplage magnétique pour connecter l'un à l'autre au moins un premier et un deuxième circuit, le dispositif de couplage magnétique comprenant :
- un premier ensemble de premières bobines destiné à être relié à l'au moins un premier circuit, chaque première bobine présentant un axe de bobinage,
- un deuxième ensemble de deuxièmes bobines destiné à être relié à l'au moins un deuxième circuit, chaque deuxième bobine présentant un axe de bobinage,
   dans lequel les premières et les deuxièmes bobines présentent au moins une configuration dans laquelle elles sont réparties le long d'une ligne fermée courbe avec leurs axes de bobinage s'étendant sensiblement selon des bissectrices de ladite ligne courbe fermée, deux premières bobines successives le long de la ligne courbe fermée étant séparées l'une de l'autre par au moins une deuxième bobine,
   au moins une deuxième bobine est montée mobile relativement à au moins une des deux premières bobines successives qu'elle sépare entre une première position dans laquelle l'au moins une deuxième bobine présente un couplage magnétique maximum vis-à-vis de ladite au moins une des deux premières bobines successives qu'elle sépare et une deuxième position dans laquelle l'au moins une deuxième bobine présente un couplage magnétique minimum avec ladite au moins une des deux premières bobines successives qu'elle sépare.

On notera que par sensiblement selon des bissectrices de la lignes courbe fermée, il est entendu, ci-dessus et dans le reste de ce document, que l'axe de bobinage des bobines peut présenter un décalage angulaire ou spatial, vis-à-vis de la bissectrice, qui est inférieur à 15°, voire 10° ou encore 5°, ou 15%, voire 10% ou encore 5% de la dimension maximale de la ligne courbe fermée (dans le cas d'une ligne courbe fermée circulaire le diamètre du cercle formé par cette dernière, dans le cas d'une ligne courbe fermée autre, la distance maximale entre deux points de ladite ligne courbe fermée).

Avec une telle configuration, l'au moins une deuxième bobine peut présenter, de par son déplacement relatif entre la première et la deuxième position, un couplage magnétique vis-à-vis de l'au moins une des deux premières bobines successives qu'elle sépare qui peut être varié/modulé. Un tel couplage variable ouvre la possibilité, comme cela sera montré ci-après de régler un gain de transformation. De plus, compte tenu de l'agencement des premières et des deuxièmes bobines le long d'une ligne fermée, les fuites de champs sont particulièrement contenues. Il en résulte que le rendement énergétique est optimal ceci sans avoir à faire appel à un noyau magnétique tel que c'est le cas dans l'art antérieur. De ce fait, le dispositif de couplage magnétique selon l'invention peut présenter un encombrement réduit vis-à-vis de ceux de l'art antérieur.

Le dispositif de couplage magnétique peut être dépourvu de noyau magnétique.

Chaque deuxième bobine peut être montée mobile relativement à au moins une des deux premières bobines successives qu'elle sépare entre une première position dans laquelle ladite deuxième bobine présente un couplage magnétique maximum vis-à-vis de ladite au moins une des deux premières bobines successives qu'elle sépare et une deuxième position dans laquelle ladite deuxième bobine présente un couplage magnétique minimum avec ladite au moins une des deux premières bobines successives qu'elle sépare.

De cette manière chacune des deuxièmes bobines peut présenter un couplage magnétique variable vis-à-vis d'au moins une des premières bobines qu'elle sépare et ainsi permettre de bénéficier des avantages liés à l'invention.

Les deuxièmes bobines peuvent être agencées solidaires entre elles de telle manière qu'elles soient déplacées ensemble de leur première position à leur deuxième position.

Un tel déplacement solidaire permet d'obtenir une même variation de couplage magnétique pour chacune des deuxièmes bobines. Une telle possibilité autorise une utilisation en parallèle du couplage entre les premières et deuxièmes bobines, comme par exemple dans le cadre d'un circuit transformateur, autorisant des applications à fort courant.

La ligne courbe fermée peut être un premier cercle, chaque deuxième bobine étant agencée mobile en rotation autour d'un axe de rotation respectif perpendiculairement à un axe de symétrie de la ligne courbe fermée, les axes de rotation des deuxièmes bobines étant répartis selon un deuxième cercle concentrique à la ligne courbe fermée et contenu dans cette dernière.

Le dispositif de couplage peut comprendre un guide support entourant les premières bobines,
chaque deuxième bobine étant connectée à une coulisse agencée coulissante le long du guide support de telle manière qu'un coulissement de ladite coulisse entraine la deuxième bobine en rotation autour de son axe de rotation.

Un tel guide permet un déplacement bien contrôlé des deuxièmes bobines entre leurs première et deuxième positions. Il en résulte un meilleur contrôle dans le déplacement de chaque deuxième bobine et donc en ce qui concerne leur couplage magnétique vis-à-vis des premières bobines.

Le dispositif de couplage magnétique peut comprendre en outre au moins un actionneur configuré pour déplacer l'au moins une deuxième bobine relativement à l'au moins une des deux premières bobines, ledit actionneur étant préférentiellement un actionneur à déplacement indexé tel qu'un moteur pas-à-pas.

Un tel actionneur permet une commande du déplacement des deuxième bobines et donc en ce qui concerne le couplage magnétique entre les premières et les deuxièmes bobines. De ce fait, avec un tel actionneur, il est envisageable d'automatiser le changement de couplage magnétique entre les premières et les deuxièmes bobines.

L'au moins une deuxième bobine peut être agencée mobile en translation relativement aux deux premières bobines qu'elle sépare entre la première position dans laquelle l'au moins une deuxième bobine et les deux premières bobines qu'elle sépare sont réparties le long de la ligne fermée courbe et la deuxième position dans laquelle une de l'au moins une deuxième bobine et de ladite au moins une des deux premières bobines successives qu'elle sépare présente son axe de bobinage à distance des bissectrices de ladite ligne courbe fermée.

L'invention concerne en outre un circuit de transformateur comprenant un dispositif de couplage magnétique selon l'invention.

Un tel circuit de transformateur bénéficie des avantages liés à l'utilisation d'un dispositif de couplage magnétique selon l'invention et à la modification de couplage magnétique qu'il autorise.

Il peut être prévu un circuit d'entrée apte à fournir à partir d'une tension d'entrée une première tension alternative à une fréquence variable, et un circuit de sortie apte à fournir, à partir d'une deuxième tension alternative à une fréquence variable, une tension de sortie d'un type donné parmi les tensions alternatives et les tensions continues, le circuit d'entrée formant l'au moins un premier circuit, le circuit de sortie formant l'au moins un deuxième circuit, le dispositif de couplage magnétique participant à un circuit résonnant présentant une fréquence de résonnance.

Un tel circuit de transformateur bénéficie particulièrement des avantages liés à un dispositif de couplage selon l'invention, puisque le changement de couplage permis par le dispositif autorise un réglage du gain de transformation du circuit conformément à l'invention.
L'invention concerne en outre un procédé de commande d'un circuit de transformateur selon l'invention, comprenant les étapes suivantes :
- Placement de l'au moins une deuxième bobine dans une position relative à l'au moins une des deux premières bobines successives qu'elle sépare parmi la première position, la deuxième position et une position intermédiaire ceci de manière à fixer le couplage magnétique entre ladite deuxième bobine et l'au moins une des deux premières bobines successives qu'elle sépare,
- commande du circuit d'entrée et du circuit de sortie de telle manière à ce que les fréquences alternatives de la première et de la deuxième tension alternative soient sensiblement égales à la fréquence de résonnance du circuit résonnant.
Un tel procédé de commande permet d'autoriser un réglage du gain de transformation du circuit de transformation ceci avec un bon rendement de transformation.

### Brève description des dessins

La présente invention sera mieux comprise à la lecture de la description d'exemples de réalisation, donnés à titre purement indicatif et nullement limitatif, en faisant référence aux dessins annexés sur lesquels :
- les figures 1A et 1B illustrent respectivement une vue en perspective et une vue de dessus d'un dispositif de couplage magnétique selon le principe de l'invention dans une première configuration dans laquelle des deuxièmes bobines présentent un couplage minimal vis-à-vis de premières bobines dudit dispositif de couplage magnétique,
- les figures 2A et 2B illustrent respectivement une vue en perspective et une vue de dessus du dispositif de couplage magnétique illustré sur les figures 1A et 1B dans une deuxième configuration dans laquelle des deuxièmes bobines présentent un couplage maximal vis-à-vis de premières bobines dudit dispositif de couplage magnétique,
- la figure 3 illustre un exemple de circuit transformateur mettant en oeuvre un dispositif de couplage magnétique selon l'invention,
- la figure 4 illustre un dispositif de couplage selon un premier mode de réalisation de l'invention selon une vue en perspective,
- la figure 5 illustre une vue rapprochée des axes de pivotement des deuxièmes bobines du dispositif de couplage illustré sur la figure 4,
- la figure 6 illustre une vue rapprochée du système de coulissement entre les premières et les deuxièmes bobines du dispositif de couplage illustré sur la figure 4,
- les figures 7A et 7B illustrent respectivement une vue en perspective et une vue de dessus d'un dispositif de couplage magnétique selon un deuxième mode de réalisation de l'invention dans lequel les deuxièmes bobines sont montées mobiles indépendamment les unes des autres.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

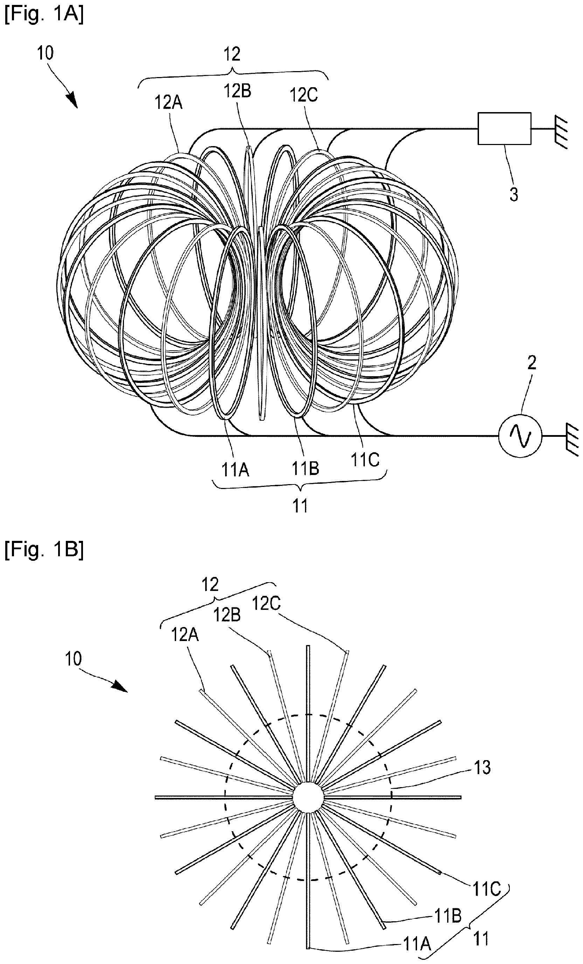

Les figures 1A à 2B illustrent, afin d'illustrer le principe de l'invention, un dispositif de couplage magnétique 10 comprenant une pluralité de premières bobines 11A, 11B, 11C... et une pluralité de deuxièmes bobines 12A, 12B, 12C... et qui présente, conformément à l'invention, un couplage entre les premières et les deuxièmes bobines qui peut être varié.

Conformément au principe de l'invention et comme le montrent les figures 1A à 2B, le dispositif de couplage magnétique 10 comprend :
- un premier ensemble 11 de premières bobines 11A, 11B, 11C... destiné à être relié à l'au moins un premier circuit 2, chaque première bobine 11A, 11B, 11C... présentant un axe de bobinage,
- un deuxième ensemble 12 de deuxièmes bobines 12A, 12B, 12C... destiné à être relié à l'au moins un deuxième circuit 3, chaque deuxième bobine 12A, 12B, 12C... présentant un axe de bobinage.

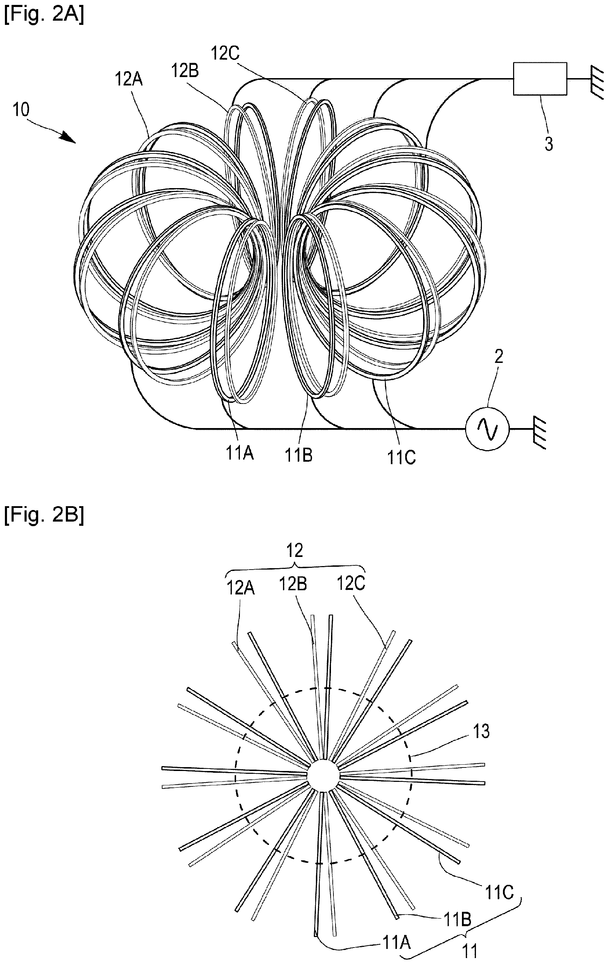

On notera que, à titre illustratif du principe de l'invention, sur les figures 1A et 2A, le premier circuit 2 est représenté sous la forme d'une source de tension alternative et que le deuxième circuit 3 est représenté sous la forme d'une charge.

Comme montré sur les figures 1A à 2B, les premières et les deuxièmes bobines 11A, 11B, 11C...,12A, 12B, 12C... sont réparties le long d'une ligne fermée courbe 13 avec leurs axes de bobinage s'étendant selon sensiblement des bissectrices de ladite ligne courbe fermée 13, deux premières bobines 11A, 11B, 11C... successives le long de la ligne courbe fermée 13 étant séparées l'une de l'autre par une deuxième bobine 12A, 12B, 12C... D'une manière identique, dans le présent mode de réalisation, deux deuxièmes bobines 12A, 12B, 12C... successives le long de la ligne courbe fermée 13 sont séparées l'une de l'autre par une première bobine 11A, 11B, 11C...

Conformément au principe de l'invention, les figures 1A et 1B illustrent une deuxième position des deuxièmes bobines 12A, 12B, 12C... dans laquelle chaque bobine est à équidistance entre les deux premières bobines qu'elle sépare. Dans une telle configuration, le couplage entre la deuxième bobine 12A, 12B, 12C... et les deux premières bobines qu'elle sépare est minimal. Les figure 2A et 2B illustrent une première position des deuxièmes bobines 12A, 12B, 12C... dans laquelle chaque deuxième bobine est à proximité de l'une des deux premières bobines qu'elle sépare de telle façon à présenter dans cette configuration un couplage magnétique maximal avec ladite première bobine 11A, 11B, 11C....

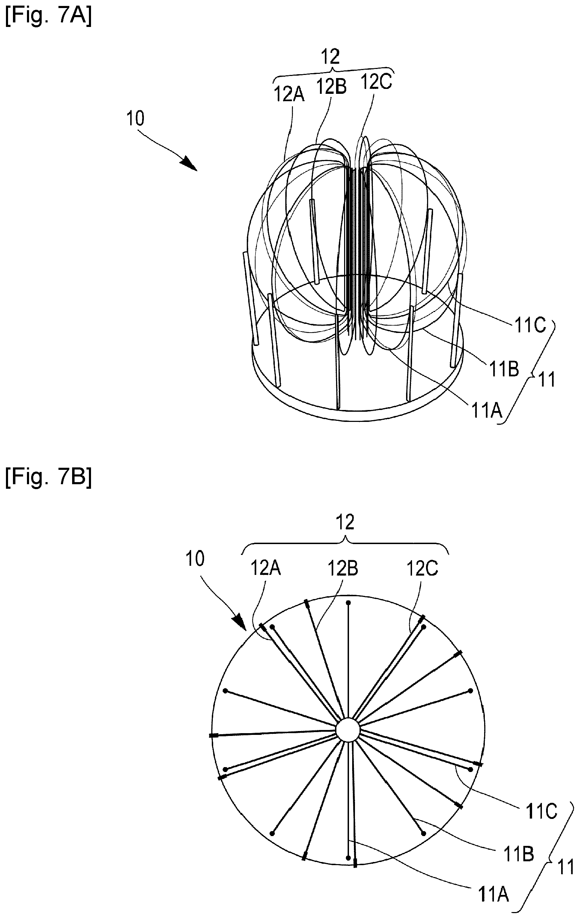

Bien entendu, comme cela sera discuté plus avant en lien avec le deuxième mode de réalisation et en lien avec les figures 7A et 7B, selon une possibilité de l'invention, si dans la présente illustration du principe de l'invention, les deuxièmes bobines 12A, 12B, 12C... sont solidaires en déplacement entre elles, il est également envisageable, sans que l'on sorte du cadre de l'invention, que les deuxièmes bobines 12A, 12B, 12C... puissent être déplaçables indépendamment les unes des autres. De même, il est également envisageable que certaines des deuxièmes bobines 12A, 12B, 12C... soient fixes et que seules une partie des deuxièmes bobines 12A, 12B, 12C... soient déplaçables relativement aux premières bobines 11A, 11B, 11C... ceci de manière solidaire ou indépendamment les unes des autres.

On notera qu'un dispositif de couplage magnétique 10 selon l'invention peut être fourni au moyen d'un procédé de fabrication d'un tel dispositif comprenant les étapes suivantes :
- fourniture d'un premier ensemble 11 de premières bobines 11A, 11B, 11C... destiné à être relié à l'au moins un premier circuit 2, chaque première bobine 11A, 11B, 11C... présentant un axe de bobinage,
- fourniture d'un deuxième ensemble 12 de deuxièmes bobines 12A, 12B, 12C... destiné à être relié à l'au moins un deuxième circuit 3, chaque deuxième bobine 12A, 12B, 12C... présentant un axe de bobinage.
- Agencement des premières et des deuxièmes bobines 11A, 11B, 11C...,12A, 12B, 12C... réparties le long d'une ligne fermée courbe 13 avec leurs axes de bobinage s'étendant selon des bissectrices de ladite ligne courbe fermée 13, deux premières bobines 11A, 11B, 11C... successives le long de la ligne courbe fermée 13 étant séparées l'une de l'autre par une deuxième bobine 12A, 12B, 12C..., les deuxièmes bobines 12A, 12B, 12C... étant déplaçables relativement aux première bobines entre la première et la deuxième position.

A titre d'illustration de la variation de couplage magnétique permise par le dispositif de couplage magnétique 10 selon l'invention, il est montré dans le tableau ci-après des valeurs de couplage calculées à partir du logiciel CST studio^{™} dans une configuration similaire à celle illustrée sur les figures 1A à 2B ceci en fonction du décalage, en degrés, des deuxièmes bobines 12A, 12B, 12C... vis-à-vis de leur deuxième position illustrée sur les figures 1A et 1B.
Pour ces calculs, il a été considéré un dispositif de couplage magnétique comprenant 12 premières bobines et 12 deuxièmes bobines circulaires et réparties le long d'une ligne circulaire fermée. Dans le présent exemple, deux premières bobines 11A, 11B, 11C... successives sont séparées de 30° et le déplacement d'une deuxième bobine 12A, 12B, 12C... de sa deuxième position (figure 1A) à sa première position (figure 2A) correspond à un décalage de 13°, puisqu'une première et une deuxième bobine 11A, 11B, 11C... 12A, 12B, 12C... ne peuvent nullement se superposer.

| Décalage en degré (Fig.1) | k | Lp (nH) | Lf (nH) |
|---|---|---|---|
| 0° | 0,65 | 33,10 | 19,10 |
| 5° | 0,66 | 33,00 | 18,62 |
| 7,5° | 0,69 | 32,90 | 17,20 |
| 9,5° | 0,7 | 32,81 | 17,18 |
| 13° | 0,74 | 32,40 | 14,60 |

**Variation du couplage magnétique et de l'inductance parasite entre les premières bobines et les deuxièmes bobines**

On peut voir que si l'inductance du primaire Lp, c'est-à-dire l'inductance équivalente des premières bobines, et donc des deuxièmes bobines, est relativement constante, puisqu'elle est comprise entre 32,4 et 33,1 nH, l'inductance parasite Lf présente une variation relativement importante, puisqu'elle est comprise entre 14,6 nH, pour le couplage magnétique maximum (k=0,74) à 13° de décalage, et 19,1 nH, pour le couplage magnétique minimum (k=0,65) à 0°.

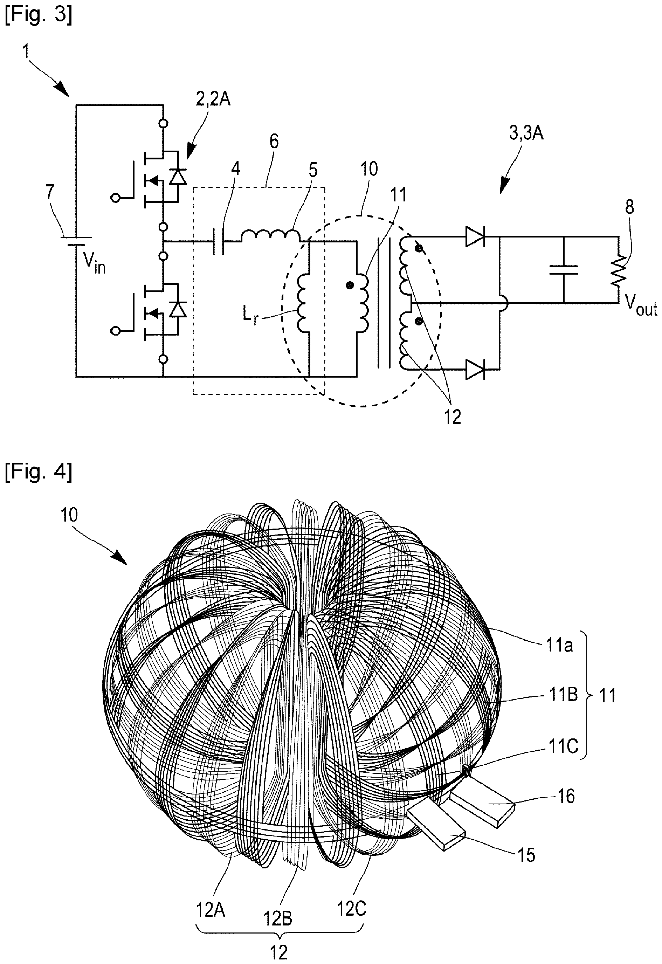

Or, si on prend l'exemple d'un transformateur résonant du type LLC, tel que celui illustré sur la figure 3, le gain d'un tel transformateur est directement lié au facteur de qualité Q qui est lui-même directement relié à l'inductance parasite Lf (en racine carrée (cas d'une modélisation simplifiée en harmonique)). Ainsi avec une telle possibilité de variation du couplage et donc de l'inductance parasite, il est possible d'aisément régler le gain d'un tel transformateur.

De ce fait, selon l'invention, un dispositif de couplage magnétique 10 peut être intégré à un circuit de transformateur 1 tel que celui illustré sur la figure 3. Un tel circuit de transformateur 1 comprend :
- un circuit d'entrée 2A, formant le premier circuit 2, apte à fournir à partir d'une tension d'entrée une première tension alternative à une fréquence variable,
- le dispositif de couplage magnétique 10 présentant ses premières bobines 11A, 11B, 11C... reliées au circuit d'entrée 2A ceci au moyen d'une capacité 4 et d'une troisième bobine 5 (qui peut être confondue avec l'inductance parasite), ladite capacité 4, ladite troisième bobine 5 et l'inductance parasite Lr du dispositif de couplage participant à la formation d'un circuit résonnant 6 présentant une fréquence de résonnance f₀ dépendant de la configuration du dispositif de couplage magnétique10, et
- un circuit de sortie 3A, relié aux deuxièmes bobines 12A, 12B, 12C... apte à fournir, à partir d'une deuxième tension alternative à une fréquence variable, identique à celle de la première tension alternative une tension de sortie d'un type donné parmi les tensions alternatives et les tensions continues.

Dans le présent exemple, le circuit de transformateur 1 permet une adaptation entre une tension d'entrée continue Vin fournie par une source de tension 7 continue et une tension de sortie Vout continue fournie à une charge 8. Pour ce faire, le circuit d'entrée 2A est donc un circuit onduleur comprenant deux interrupteurs, non référencés. Le circuit de sortie 3A forme un circuit redresseur basé sur deux diodes et une capacité de filtration non référencées. Un tel circuit de sortie 3A présente l'avantage, en fonction de la valeur de sa capacité de filtration, de permettre un redressement de sa tension d'entrée sur une plage de fréquence relativement importante.

Selon le principe de l'invention, dans le cadre d'un tel circuit de transformateur 1, le gain du circuit de transformateur peut être réglé en positionnant les deuxièmes bobines 12A, 12B, 12C... dans une position relative aux premières bobines 11A, 11B, 11C... pour obtenir le couplage magnétique k qui est associé à ce gain. Une fois le dispositif de couplage magnétique 10 ainsi réglé, ce positionnement va également permettre de fixer la fréquence de résonnance f₀ du circuit résonnant 6. Les circuits d'entrée 2A et de sortie 3A, dans le présent cas uniquement le circuit d'entrée 2A, puisque le circuit de sortie 3A est un circuit passif, peuvent être commandés pour que les fréquences alternatives de la première et de la deuxième tension alternative soient sensiblement égales à la fréquence de résonnance f₀ du circuit résonnant 6.

Ainsi, un tel réglage peut être obtenu au moyen d'un procédé de commande du circuit de transformateur comprenant les étapes suivantes :
- placement des deuxièmes bobines 12A, 12B, 12C... dans une position relative aux premières bobines 11A, 11B, 11C... dans une position sélectionnée parmi la première position, la deuxième position et une position intermédiaire entre la première et la deuxième position ceci de manière à fixer le couplage magnétique entre les deuxièmes bobines 12A, 12B, 12C... et les premières bobines 11A, 11B, 11C...,
- commande du circuit d'entrée 2A et du circuit de sortie 3A de telle manière à ce que les fréquences alternatives de la première et de la deuxième tension alternative soient sensiblement égales à la fréquence de résonnance f₀ du circuit résonnant 6.

Selon ce procédé, il est ainsi possible d'adapter le gain du circuit de transformateur 1, par le placement des deuxièmes bobines 12A, 12B, 12C... dans une position relative adaptée, tout en présentant un rendement optimal quel que soit le gain, puisque le circuit de transformateur peut fonctionner à chaque fois à la fréquence de résonnance du circuit résonnant 6. En effet, un tel fonctionnement à la fréquence de résonnance permet d'obtenir un découpage du circuit d'entrée au zéro de tension et de courant.

On notera bien entendu que le circuit de transformateur 1 illustré sur la figure 3 n'est donné qu'à titre d'illustration et que d'autres circuits de transformateur 1 peuvent être utilisés sans que l'on sorte du cadre de l'invention. Ainsi, si le circuit d'entrée est un ondulateur apte à fournir une tension alternative à la fréquence du circuit résonnant 6 à partir d'une tension continue, il peut également être formé par un onduleur apte à fournir une tension alternative à la fréquence de résonnance du circuit résonnant 6 à partir d'une tension alternative sans que l'on sorte du cadre de l'invention. De même si le circuit de sortie 3A est dans le présent exemple un circuit redresseur, il peut également être, sans que l'on sorte du cadre de l'invention, un onduleur apte à fournir une tension de sortie à une fréquence donnée à partir d'une tension alternative présentant la fréquence de résonnance du circuit résonnant 6 sans que l'on sorte du cadre de l'invention.

La figure 4 illustre un dispositif de couplage magnétique 10 selon un premier mode de réalisation de l'invention illustrant une possibilité de montage mobile des deuxièmes bobines 12A, 12B, 12C... relativement aux premières bobines 11A, 11B, 11C... Comme cela est montré sur la figure 4, dans ce premier mode de réalisation, chacune des premières bobines 11A, 11B, 11C... et des deuxièmes bobines 12A, 12B, 12C.... comprend une pluralité de spires, non référencées, lesdites spires étant agencées avec, sur une première portion interne à la ligne courbe fermée 13, un empilement de spires selon une direction sensiblement perpendiculaire à la bissectrice de la ligne courbe fermée 13, et sur une deuxième portion externe à la ligne fermée, un étalement de spires le long de la ligne courbe fermée 13.

Avec un tel agencement, pour chacune des premières bobines 11A, 11B, 11C... et des deuxièmes bobines 12A, 12B, 12C..., la partie des spires comprise dans la première portion interne permet un couplage magnétique optimisé tandis que la partie des spires comprise dans la deuxième portion externe, participe au confinement du champ magnétique. De ce fait et afin d'optimiser le transfert et le confinement du champ magnétique, les spires de chaque première bobine 11A, 11B, 11C... peuvent :
- s'étendre sur la première portion selon une direction sensiblement perpendiculaire à un plan de la ligne courbe fermée 13, et
- s'étendre, sur leur deuxième portion et de manière avantageuse, selon une ligne courbe, préférentiellement en arc de cercle, autour de la ligne courbe fermée.

Ainsi les spires de chacune des premières bobines 11A, 11B, 11C... et des deuxièmes bobines 12A, 12B, 12C... peuvent présenter une forme en « D » avec la partie verticale du « D » correspondant à la première portion interne, parallèle à un axe de la ligne courbe fermée 13, et la partie courbe du « D » correspondant à la deuxième portion extérieure des spires. Avec une telle configuration, on obtient un transfert d'énergie particulièrement optimisé entre les premières et deuxièmes bobines 11A, 11B, 11C..., 12A, 12B, 12C... avec un arrangement du dispositif de couplage magnétique 10 particulièrement compact. On peut en effet, voir sur la figure 2 que les premières et deuxièmes bobines 11A, 11B, 11C..., 12A, 12B, 12C... sont agencées selon une forme sensiblement sphérique. On notera que, selon une possibilité avantageuse de l'invention, non montrée, il peut être prévu un support de bobinage pour chacune des premières bobines 11A, 11B, 11C... et des deuxièmes bobines 12A, 12B, 12C... permettant la mise en forme de chacune des bobines 11A, 11B, 11C...,12A, 12B, 12C...

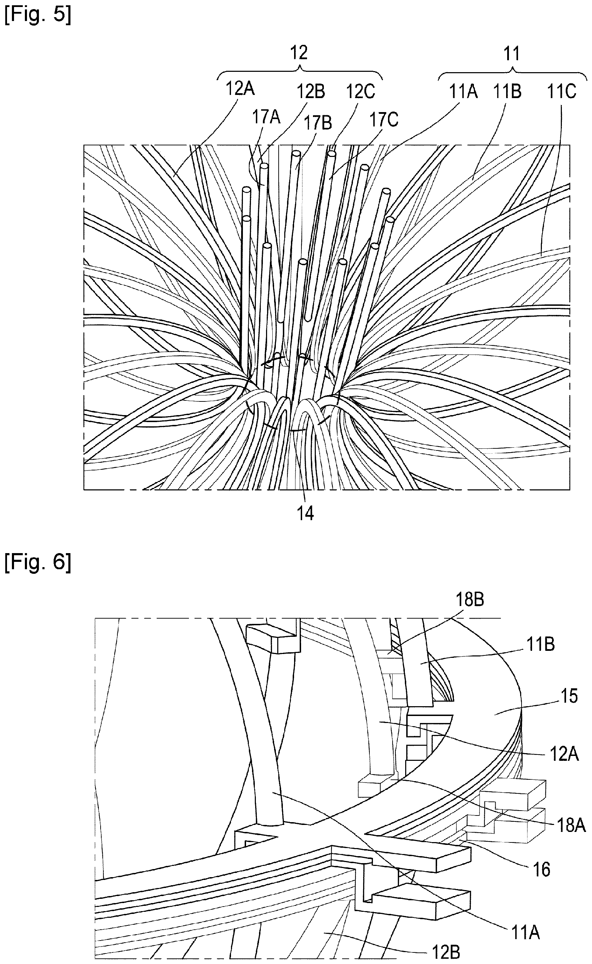

Afin de permettre un déplacement des deuxièmes bobines 12A, 12B, 12C... vis-à-vis des premières bobines 11A, 11B, 11C..., chaque deuxième bobine 12A, 12B, 12C... est agencée mobile en rotation autour d'un axe de rotation 17A, 17B, 17C... respectif perpendiculairement à un axe de symétrie de la ligne courbe fermée 13. Les axes de rotation 17A, 17B, 17C... des deuxièmes bobines 12A, 12B, 12C... sont répartis selon un deuxième cercle 14 concentrique à la ligne courbe fermée 13 et contenu dans cette dernière comme cela est montré sur la figure 5. On notera, plus précisément, que chaque axe de rotation s'entend parallèlement et à proximité de la première portion de la deuxième bobine 12A, 12B, 12C... correspondante.

Pour permettre un déplacement des deuxièmes bobines 12A, 12B, 12C..., le dispositif de couplage magnétique 10 comprend, comme illustré sur la figure 6, un guide support 15 entourant les premières et les deuxièmes bobines 11A, 11B, 11C... 12A, 12B, 12C... Dans le présent mode de réalisation, comme montré sur la figure 6, le guide support est formé par un rail circulaire qui entoure les premières et les deuxièmes bobines 11A, 11B, 11C... 12A, 12B, 12C... en étant solidaire des premières bobines 11A, 11B, 11C..., le guide support 15 peut présenter un profil de guidage, tel qu'une gorge non montrée, apte à coopérer avec un élément de guidage, tel qu'une nervure non montrée, d'une coulisse 16 agencée. Les deuxièmes bobines 12A, 12B, 12C... sont, dans le présent mode de réalisation, rendues solidaires en déplacement de la coulisse 16 aux moyens de deuxièmes liaisons glissantes 18A, 18B respectives selon une direction radiale de la coulisse 16. Selon une caractéristique avantageuse, chacune de ces liaisons glissantes 18A, 18B comprend un élément de rappel élastique non montré, tel qu'un ressort.

D'une manière préférentielle, le dispositif de couplage magnétique 10 peut comprendre un actionneur pour permettre une commande des déplacements relatifs des deuxièmes bobines 12A, 12B, 12C... Un tel actionneur est préférentiellement un actionneur indexé en déplacement, tel qu'un moteur pas-à-pas, afin d'autoriser une indexation du déplacement des deuxièmes bobines 12A, 12B, 12C... et donc sur le couplage magnétique vis-à-vis des premières bobines 11A, 11B, 11C...

Bien entendu, dans le cadre d'une réalisation pratique du présent mode de réalisation, chacune des premières et deuxièmes bobines peut comprendre un support de bobinage, non montré, et être rendue solidaire de respectivement le guide support 15 et la coulisse 16 par ledit support de bobinage.

Les figures 7A et 7B illustrent un dispositif de couplage magnétique 10 selon un deuxième mode de réalisation de l'invention dans lequel les deuxièmes bobines 12A, 12B, 12C... sont agencées mobiles relatives aux premières bobines 11A, 11B, 11C... de manière indépendante les unes des autres. Un dispositif de couplage magnétique 10 selon ce deuxième mode de réalisation se différencie d'un dispositif de couplage magnétique 10 en ce que les deuxièmes bobines 12A, 12B, 12C sont libres de se déplacer entre leurs première et deuxième positions respectives indépendamment les unes des autres.

Une telle configuration permet de prévoir une pluralité de circuits de transformateur dont une ou plusieurs des premières bobines 11A, 11B, 11C... respectives forment la ou les bobines primaires et l'une ou les deuxièmes bobines 12A , 12B, 12C... associées à la ou auxdites premières bobines 11A, 11B, 11C... forment la ou les bobines secondaires de chacun desdits circuits de transformateur. De cette manière, le gain desdits circuits de transformateur étant dépendant du couplage magnétique entre la ou les premières bobines 11A, 11B, 11C... respectives et la ou les deuxièmes bobines 12A, 12B, 12C... qui leur sont associées, il est donc envisageable, avec un seul et même dispositif de couplage, de fournir différentes sorties d'alimentation adaptées et en parallèle pour différents dispositifs, tels qu'une voiture électrique, une trottinette électrique ou un ordinateur portable, qui requièrent des tensions d'alimentation distinctes.

Pour permettre un tel déplacement indépendant des deuxièmes bobines 12A, 12B, 12C... entre elles, d'une manière identique au premier mode de réalisation, il peut être prévu un guide support 15 entourant les premières et les deuxièmes bobines 11A, 11B, 11c... 12A, 12B, 12C.... Ce guide support 15 peut coopérer avec une pluralité de coulisses, non illustrées, qui sont chacune solidaire en déplacement d'une ou plusieurs deuxièmes bobines 12A, 12B, 12C... ceci au moyen d'une liaison glissante. De cette manière, comme montré sur les figures 7A, 7B, les deuxièmes bobines 12A, 12B, 12C..., ou des groupes de deuxièmes bobines 12A, 12B, 12C... peuvent être déplacées indépendamment les unes des autres.

On notera que si dans le cadre de la description du principe de l'invention, sur la base des figures 1A à 2B, et de ces deux modes de réalisation décrits en lien avec les figures 3 à 7B, les deuxièmes bobines 12A, 12B, 12C... sont agencées mobiles en rotation vis-à-vis des premières bobines 11A, 11B, 11C..., d'autre types d'agencements, tels qu'un agencement mobile en translation selon une direction parallèle à l'axe de symétrie de la ligne courbe fermée 13, sont bien entendu envisageables sans que l'on sorte du cadre de l'invention.

## Revendications

1. Dispositif de couplage magnétique (10) pour connecter l'un à l'autre au moins un premier et un deuxième circuit (2, 3), le dispositif de couplage magnétique (10) comprenant :
- un premier ensemble (11) de premières bobines (11A, 11B, 11C...) destiné à être relié à l'au moins un premier circuit (2), chaque première bobine (11A, 11B, 11C...) présentant un axe de bobinage,
- un deuxième ensemble (12) de deuxièmes bobines (12A, 12B, 12C...) destiné à être relié à l'au moins un deuxième circuit (3), chaque deuxième bobine (12A, 12B, 12C...) présentant un axe de bobinage,
dans lequel les premières et les deuxièmes bobines (11A, 11B, 11C...,12A, 12B, 12C...) présentent au moins une configuration dans laquelle elles sont réparties le long d'une ligne fermée courbe (13) avec leurs axes de bobinage s'étendant sensiblement selon des bissectrices de ladite ligne courbe fermée (13), deux premières bobines (11A, 11B, 11C...) successives le long de la ligne courbe fermée (13) étant séparées l'une de l'autre par au moins une deuxième bobine (12A, 12B, 12C...),
le dispositif de couplage magnétique (10) **étant caractérisé en ce qu'au** moins une deuxième bobine (12A, 12B, 12C...) est montée mobile relativement à au moins une des deux premières bobines (11A, 11B, 11C...) successives qu'elle sépare entre une première position dans laquelle l'au moins une deuxième bobine (12A, 12B, 12C...), présente un couplage magnétique maximum vis-à-vis de ladite au moins une des deux premières bobines (11A, 11B, 11C...) successives qu'elle sépare et une deuxième position dans laquelle l'au moins une deuxième bobine (12A, 12B, 12C...) présente un couplage magnétique minimum avec ladite au moins une des deux premières bobines (11A, 11B, 11C...) successives qu'elle sépare.

2. Dispositif de couplage magnétique (10) selon la revendication 1, dans lequel chaque deuxième bobine (12A, 12B, 12C...) est montée mobile relativement à au moins une des deux premières bobines (11A, 11B, 11C...) successives qu'elle sépare entre une première position dans laquelle ladite deuxième bobine (12A, 12B, 12C...) présente un couplage magnétique maximum vis-à-vis de ladite au moins une des deux premières bobines (11A, 11B, 11C...) successives qu'elle sépare et une deuxième position dans laquelle ladite deuxième bobine (12A, 12B, 12C...) présente un couplage magnétique minimum avec ladite au moins une des deux premières bobines (11A, 11B, 11C...) successives qu'elle sépare.

3. Dispositif de couplage magnétique (10) selon la revendication 2, dans lequel les deuxièmes bobines (12A, 12B, 12C...) sont agencées solidaires entre elles de telle manière qu'elles soient déplacées ensemble de leur première position à leur deuxième position.

4. Dispositif de couplage magnétique (10) selon la revendication 2 ou 3, dans lequel la ligne courbe fermée (13) est un premier cercle, chaque deuxième bobine (12A, 12B, 12C...) étant agencée mobile en rotation autour d'un axe de rotation (17A, 17B, 17C...) respectif perpendiculairement à un axe de symétrie de la ligne courbe fermée (13), les axes de rotation des deuxièmes bobines (12A, 12B, 12C...) étant répartis selon un deuxième cercle (14) concentrique à la ligne courbe fermée (13) et contenu dans cette dernière.

5. Dispositif de couplage magnétique (10) selon la revendication 4 comprenant un guide support (15) entourant les premières bobines,
dans lequel chaque deuxième bobine est connectée à une coulisse (16) agencée coulissante le long du guide support (15) de telle manière qu'un coulissement de ladite coulisse entraine la deuxième bobine en rotation autour de son axe de rotation.

6. Dispositif de couplage magnétique (10) selon l'une quelconque des revendications 1 à 5 comprenant en outre au moins un actionneur configuré pour déplacer l'au moins une deuxième bobine (12A, 12B, 12C...) relativement à l'au moins une des deux premières bobines qu'elle sépare, ledit actionneur étant préférentiellement un actionneur à déplacement indexé tel qu'un moteur pas-à-pas.

7. Dispositif de couplage magnétique (10) selon l'une quelconque des revendications 1 à 3, dans lequel l'au moins une deuxième bobine est agencée mobile en translation relativement aux deux premières bobines qu'elle sépare entre la première position dans laquelle l'au moins une deuxième bobine et les deux premières bobines qu'elle sépare sont réparties le long de la ligne fermée courbe (13) et la deuxième position dans laquelle une de l'au moins une deuxième bobine et de ladite au moins une des deux premières bobines (11A, 11B, 11C...) successives qu'elle sépare présente son axe de bobinage à distance des bissectrices de ladite ligne courbe fermée (13).

8. Circuit de transformateur (1) comprenant un dispositif de couplage magnétique (10) selon l'une quelconque des revendications 1 à 7.

9. Circuit de transformateur (1) selon la revendication 8, dans lequel il est prévu un circuit d'entrée (2A) apte à fournir à partir d'une tension d'entrée une première tension alternative à une fréquence variable, et un circuit de sortie (3A) apte à fournir, à partir d'une deuxième tension alternative à une fréquence variable, une tension de sortie d'un type donné parmi les tensions alternatives et les tensions continues,
dans lequel le circuit d'entrée (2A) forme l'au moins un premier circuit (2), le circuit de sortie (3A) forme l'au moins un deuxième circuit (3), le dispositif de couplage magnétique (10) participant à un circuit résonnant (6) présentant une fréquence de résonnance (f₀).

10. Procédé de commande d'un circuit de transformateur (1) selon la revendication 9, comprenant les étapes suivantes :
- Placement de l'au moins une deuxième bobine (12A, 12B, 12C...) dans une position relative à l'au moins une des deux premières bobines (11A, 11B, 11C...) successives qu'elle sépare parmi la première position, la deuxième position et une position intermédiaire ceci de manière à fixer le couplage magnétique entre ladite deuxième bobine et l'au moins une des deux premières bobines (11A, 11B, 11C...) successives qu'elle sépare,
- commande du circuit d'entrée (2A) et du circuit de sortie (3A) de telle manière à ce que les fréquences alternatives de la première et de la deuxième tension alternative soient sensiblement égales à la fréquence de résonnance du circuit résonnant (6).
